# EUROPEAN PATENT APPLICATION

(11) **EP 4 813 608 A2**
(43) Date of publication of application: **30.09.2026**
(21) Application number: 26168089.6
(22) Date of filing: 26.03.2026
(51) Int. Cl.: B29C 63/00, B23Q 3/18, B29C 63/02

(54) **JIG AND COATING APPARATUS**

(30) Priority: 28.03.2025 JP 2025056309
(71) Applicant: TAIKISHA LTD., Tokyo 160-6129 (JP)
(72) Inventor: HIGASHI, Yoshio, Tokyo, 1606129 (JP); SUZUKI, Hiroyuki, Tokyo, 1606129 (JP); WATANABE, Seidai, Tokyo, 1606129 (JP)
(74) Representative: Mathys & Squire

(57) **Abstract**

A jig used in a coating apparatus. The jig includes a base member including a first opposing surface; a placement member including a placement surface on which a work to be coated is placeable, and a second opposing surface that opposes the first opposing surface, the placement member being attachable to and removable from the base member; a recessed portion formed in one of the placement member and the base member; and a protrusion portion that is formed in another one of the placement member and the base member and configured to engage with the recessed portion, wherein dimensions of the recessed portion and the protrusion portion are such that the recessed portion and the protrusion portion engage with each other so that the first opposing surface and the second opposing surface come into contact with each other.

## Description

### BACKGROUND OF THE INVENTION

### Field of the Invention

The present invention relates to a jig and a coating apparatus.

### Description of the Related Art

Jigs for holding objects are known. Japanese Patent Laid-Open No. 2009-269123 discloses a work holding apparatus for holding a work, such as a part to be processed, conveying and positioning the work, and performing processing like assembling. Also, Japanese Utility Model Publication No. 61-107705 discloses a positioning jig that is used to position a container of a product, such as a food, a drug, or a cosmetic, on a processing line within a production line for the product.

### SUMMARY OF THE INVENTION

Incidentally, regarding a configuration of a jig that is used in a coating apparatus that coats a work to be coated with a film, there has been a problem that the jig easily deforms when coating the work to be coated with the film. In view of this, there has been demand for a technique to prevent deformation of a jig used in a coating apparatus that coats a work to be coated with a film.

The present invention aims to provide a technique to prevent deformation of a jig used in a coating apparatus that coats a work to be coated with a film.

The present disclosure in its first aspect provides a jig as specified in claim 1. Optional features are specified in claims 2 to 9.

The present disclosure in its second aspect provides a coating apparatus as specified in claim 10.

According to the present invention, deformation of a jig can be prevented.

### BRIEF DESCRIPTION OF THE DRAWINGS

FIG. 1 is a diagram illustrating an example of an overall configuration of a coating apparatus.
FIG. 2 is a diagram illustrating an exemplary configuration of a part of the coating apparatus.
FIG. 3 is a diagram illustrating an exemplary configuration of a part of the coating apparatus.
FIG. 4 is a diagram illustrating an exemplary configuration of a part of the coating apparatus.
FIG. 5 is a partial cross-sectional view of the coating apparatus.
FIG. 6 is a partial enlarged view of the coating apparatus.
FIG. 7 is a partial enlarged view of the coating apparatus.
FIG. 8 is a diagram for describing an operation of the coating apparatus.
FIG. 9 is a diagram for describing an operation of the coating apparatus.
FIG. 10 is a diagram for describing an operation of the coating apparatus.
FIG. 11 is a diagram for describing an operation of the coating apparatus.
FIG. 12 is a diagram for describing an operation of the coating apparatus.
FIG. 13 is a diagram for describing an operation of the coating apparatus.
FIG. 14 is a diagram for describing an operation of the coating apparatus.
FIG. 15 is a diagram for describing an operation of the coating apparatus.
FIG. 16 is a diagram for describing an operation of the coating apparatus.
FIG. 17 is a diagram for describing an operation of the coating apparatus.
FIG. 18 is a diagram for describing a detailed configuration of a jig on which a work to be coated is placed.
FIG. 19A is a cross-sectional view of a placement member, and FIG. 19B is a cross-sectional view of a base member.
FIG. 20 is a cross-sectional view of the placement member and the base member.
FIG. 21A is a bottom view of the placement member, and FIG. 21B is a plan view of the base member.
FIG. 22A is a cross-sectional view of a placement member, and FIG. 22B is a cross-sectional view of a base member.
FIG. 23A is a cross-sectional view of a placement member, and FIG. 23B is a cross-sectional view of a base member.

### DESCRIPTION OF THE EMBODIMENTS

Hereinafter, embodiments will be described in detail with reference to the attached drawings. Note, the following embodiments are not intended to limit the scope of the claimed invention, and limitation is not made to an invention that requires a combination of all features described in the embodiments. Two or more of the multiple features described in the embodiments may be combined as appropriate. Furthermore, the same reference numerals are given to the same or similar configurations, and redundant description thereof is omitted.

### <First Embodiment>

In the present embodiment, an exemplary configuration of a coating apparatus that shapes a film by coating a work to be coated, which is placed on a jig, with a film will be described. Although the present embodiment will be described under the assumption that a work to be coated, which is to be coated with a film, is a member for a vehicle (e.g., a four-wheeled vehicle), the work to be coated is not limited thereto, and the present invention is applicable to a variety of objects.

### <Overall Configuration of Coating Apparatus>

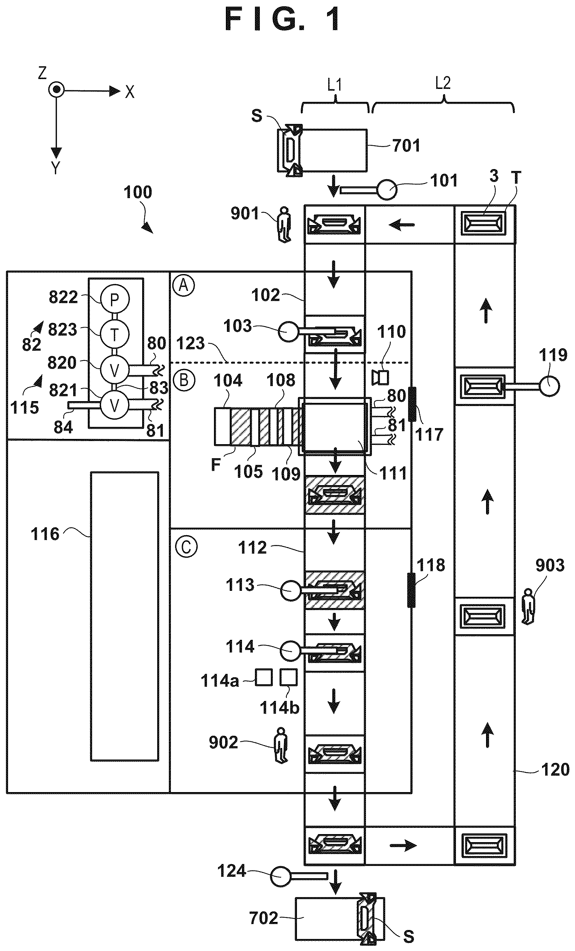

FIG. 1 is a diagram illustrating an example of an overall configuration of a coating apparatus 100 according to the present embodiment. Arrows in the diagram indicate the conveyance directions of a work S to be coated alone, a jig 3 on which the work S to be coated is placed, or the jig 3 alone. In the following description, the conveyance direction of a film F may be referred to as an X direction, the conveyance direction of the work S to be coated on a coating line L1 may be referred to as a Y direction, and a height direction (vertical direction) of the coating apparatus 100 may be referred to as a Z direction, for the sake of convenience.

The coating apparatus 100 includes a conveyance unit 101. The conveyance unit 101 grips the work S to be coated that has been placed and carried on a conveyance car 701, and places the work S to be coated on a jig 3 at a start position (entrance) of the coating line L1. The jig 3 is placed on a conveyance table T. The conveyance unit 101 is, for example, an apparatus like a robotic arm. A first operator 901 checks whether the work S to be coated is appropriately placed on the jig 3, and also degreases the work S to be coated placed on the jig 3 by manually wiping the same. Further, when the work S to be coated is not appropriately placed on the jig 3, the first operator 901 performs position adjustment. Note that the operations by the first operator 901 may be performed by a robot and the like.

Thereafter, the work S to be coated is conveyed to a dust removal area A along the coating line L1 in a state in which it is placed on the jig 3. The coating apparatus 100 includes a conveyance unit 102 and a conveyance unit 112 that convey the work S to be coated placed on the jig 3 on the coating line L1. The conveyance unit 102 conveys the jig 3 and the work S to be coated at the upstream side of a coating unit 111 on the coating line 1. The conveyance unit 112 conveys the jig 3 and the work S to be coated at the downstream side of the coating unit 111. The conveyance unit 102 and the conveyance unit 112 are each, for example, a roller conveyer. Note that the conveyance unit 102 and the conveyance unit 112 may be other conveyer apparatuses, such as belt conveyers, or may be multi-jointed robots. Further, the conveyance of the jig 3 and the work S to be coated may be manually performed by an operator.

The coating apparatus 100 includes a dust removal unit 103 that performs a cleaning operation with respect to the work S to be coated in the dust removal area A. The dust removal unit 103 performs the cleaning operation through, for example, suctioning of dirt. Further, the dust removal unit 103 includes, for example, a wiping unit like a mop, and wipes a surface of the work S to be coated at the same time as the suctioning; in this way, it performs a cleaning operation that does not release dirt into the space of the dust removal area A.

After the cleaning operation by the dust removal unit 103, the conveyance unit 102 conveys the work S to be coated placed on the jig 3 to a coating area B. The coating apparatus 100 includes an accommodation unit 104, conveyance rollers 105, a take-up roller 108, a cut unit 109, a detection unit 110, and a coating unit 111 in the coating area B.

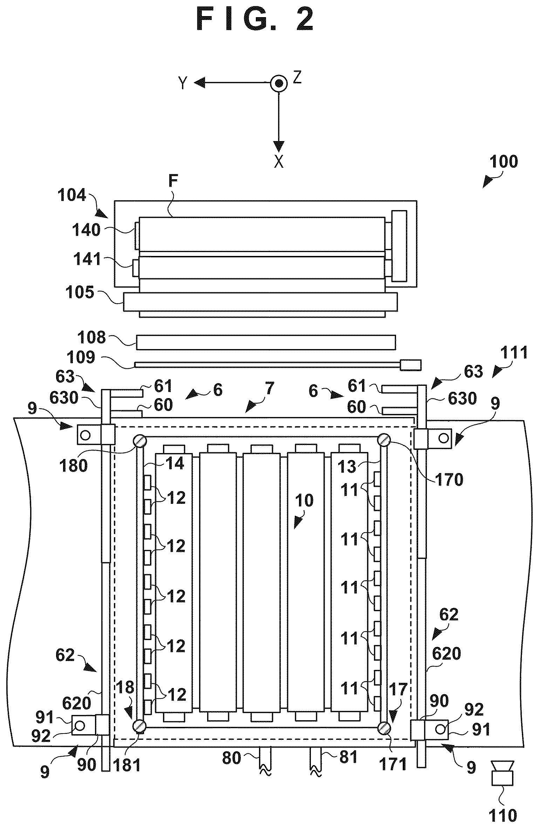

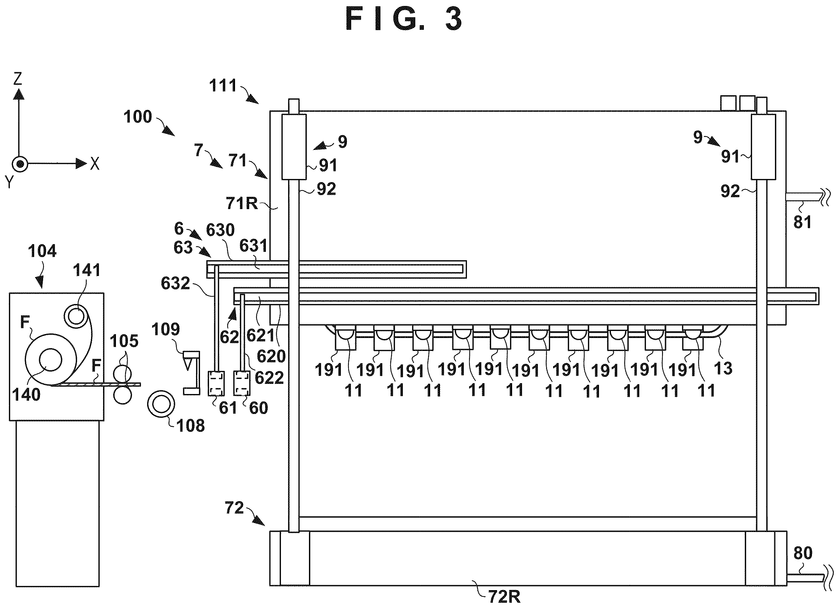

Each configuration of the coating apparatus 100 in the coating area B will now be described with reference to FIGS. 2 and 3 in addition to FIG. 1. FIG. 2 is a plan view of the coating apparatus 100 in the coating area B. A dot-line portion of a chamber 7 of the coating unit 111 illustrated in FIG. 2 represents the interior of the chamber 7. FIG. 3 is a side view of the coating apparatus 100 when viewed from the downstream side of the coating line L1.

A pre-coating film F is accommodated in the accommodation unit 104. The accommodation unit 104 includes a support roller 140, a take-up roller 141, and the like. The support roller 140 is a roller by which the film F, which is wound into a roll, is rotatably supported. The take-up roller 141 is a roller for taking up a release film (protection film) when the release film is layered on a front surface of the film F. The film F is, for example, a film F that uses a stretchable material, specifically a thermoplastic resin, and the film F has an adhesive layer on a back surface side thereof (a surface at the side that is to coat the work to be coated).

The conveyance rollers 105 are a pair of rollers for conveying the film F accommodated in the accommodation unit 104 to the coating unit 111. The film F supported by the support roller 140 is pulled out in a planar fashion by the conveyance rollers 105.

The detection unit 110 is arranged at the upstream side of the coating unit 111 on the coating line L1, and detects the shape of the work S to be coated when the work S to be coated and the jig 3 are conveyed to the coating unit 111. The detection unit 110 is, for example, a camera, a sensor, or the like. Note that the detection unit 110 may be provided inside the coating unit 111.

The take-up roller 108 is a roller for taking up a release film (protection film) when the release film is layered on a back surface of the film F. The cut unit 109 cuts the film F between the accommodation unit 104 and the coating unit 111 when moving the film F to the interior of the coating unit 111. The cut unit 109 may cut the film F by, sliding a cutter in the width direction of the film F. The width direction of the film F is the axial direction of the rolled film F. Further, the cut unit 109 may cut the film F by lowering a cutter that has a large width and is situated along the width direction of the film F, and pressing the cutter in the thickness direction of the film F. Further, the cut unit 109 may cut the film F by laser.

As an example, the coating unit 111 is an apparatus of a vacuum molding style that improves the adhesion of the film F to the work S to be coated by utilizing an air pressure difference. Regarding each configuration included in the coating unit 111, the details will be described later. After the work S to be coated has been conveyed to the space in the coating unit 111 (slide-in), the coating unit 111 sets the film F at a desired position. Then, the coating unit 111 places the space in the coating unit 111 in a vacuum state (depressurized state), performs a heating operation for the film F, and performs a coating operation of coating the work S to be coated with the film F. Note that the order of a vacuum operation of placing the space in the coating unit 111 in the vacuum state and the heating operation of heating the film F is not limited. The heating operation may be performed after the vacuum operation, the vacuum operation may be performed after the heating operation, or the vacuum operation and the heating operation may be performed at overlapping timings. Further, the method of conveying the work S to be coated to the interior of the coating unit 111 is not limited to the slide-in. The work S to be coated may be lifted up and conveyed to the interior of the coating unit 111, together with the jig 3, by a lifter (not illustrated) or a gripping robot.

Upon completion of the coating operation, the coating unit 111 conveys the coated work S to the outside of the coating unit 111 (slide-out). At the same time as this slide-out of the coated work S, the coating apparatus 100 controls the conveyance unit 102 so that the next work S to be coated is slid into the interior of the coating unit 111. Further, the method of conveying the coated work S to the outside of the coating unit 111 is not limited to the slide-out. The coated work S may be lifted up and conveyed to the outside of the coating unit 111, together with the jig 3, by a lifter (not illustrated) or a gripping robot.

The coating operation by the coating unit 111 places the work S to be coated, the jig 3, and an area therearound in a state in which they have been coated with the film F. The coated work S and the jig 3 are conveyed to a removal area C in this state (see FIG. 1).

The coating apparatus 100 includes a cut unit 113 that cuts an unnecessary portion of the post-coating film F in the removal area C. The cut unit 113 may cut the film F along an edge portion of the coated work S. Further, the cut unit 113 may cut off a portion of the film F that sticks out of the coated work S. The cut unit 113 cuts the film F with use of, for example, a CO₂ laser.

Then, after the cut unit 113 has cut off the unnecessary portion of the post-coating film F, the conveyance unit 112 conveys the coated work S and the jig 3 to a position of a collection unit 114 on the coating line L1. The coating apparatus 100 includes the collection unit 114 that collects a waste film that has been cut off by the cut unit 113. A waste film is a scrap of the film F (a film end material) generated by cutting the film F. The collection unit 114 performs an operation of tearing off a waste film that has been cut off from the jig 3, seizing the waste film, and putting the waste film into a first waste box 114a or a second waste box 114b. Note that a release agent is applied in advance to the jig 3 and a surface around the work S to be coated and the jig 3 (a placement surface of the jig 3), so as to achieve a state in which the film is easily torn off by the collection unit 114.

Thereafter, the conveyance unit 112 conveys the coated work S and the jig 3 to a position of a second operator 902. The second operator 902 executes tidying processing by manually tearing off film end materials that have been left unremoved by the collection unit 114, and also performs a quality check, a repairing task, and the like as necessary. Thereafter, the coated work S and the jig 3 are conveyed to the outside of the removal area C, the coated work S is gripped by a conveyance unit 124 of the coating apparatus 100, and the coated work S in a state in which it has been coated with the film F is placed on a cart 702.

Note that the second operator 902 may be positioned in a work environment space that is different from the cut unit 113 and the collection unit 114. That is to say, partitioning may be performed such that a space in which the cut unit 113 and the collection unit 114 are arranged is considered as a removal area C1, and a space in which the second operator 902 is placed is considered as a removal area C2. In this case, there may be fluid communication between the removal area C1 and the removal area C2 along the coating line L1. In this instance, the coating apparatus 100 may be configured such that the air does not flow from the removal area C1 to the removal area C2 by performing control to make the pressure in the removal area C1 lower than the pressure in the removal area C2. In this way, the second operator 902 is isolated from dust, smoke, and the like that have been generated through the operations of the cut unit 113 and the collection unit 114, and thus a work environment can be improved.

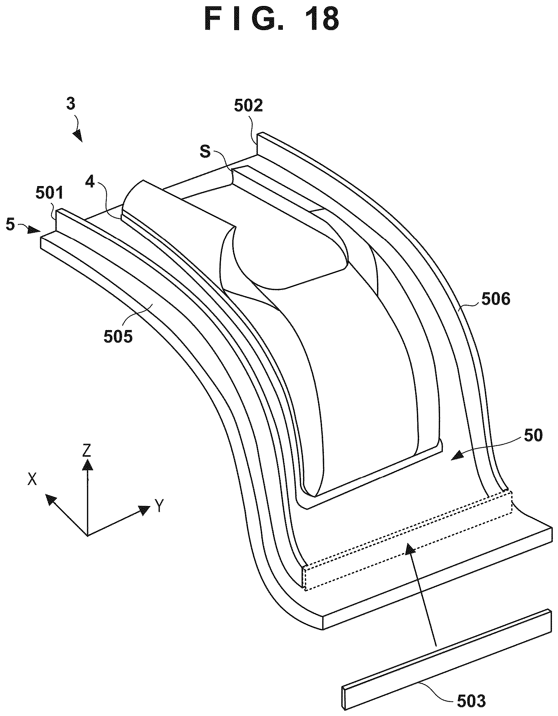

After the conveyance unit 124 has gripped and moved the coated work S, only the jig 3 is left. This jig 3 is returned along a jig return line L2 by a conveyance unit 120 of the coating apparatus 100. The jig 3 is conveyed to a position of a third operator 903 along the jig return line L2. The third operator 903 cleans up dirt that was left at the time of cutting. Further, the third operator 903 applies a release agent to the jig 3. Note that a configuration in which the operation of cleaning up dirt and the operation of applying a release agent are automatically performed by a robot may be taken. Thereafter, the jig 3 is further conveyed to a position of a conveyance unit 119 along the jig return line L2. The coating apparatus 100 includes the conveyance unit 119 that performs an operation of replacing the jig 3 in correspondence with the type of the work S to be coated that will be placed next. In accordance with a shape of the work S to be coated, the conveyance unit 119 may replace a later-described placement member 4 of the jig 3 (see FIG. 18), rather than the entirety of the jig 3. When the replacing operation is necessary, the conveyance unit 119 grips the jig 3, moves the jig 3 from the jig return line L2 to the outside of the line, and moves another jig from the outside of the line to the jig return line L2. Thereafter, the jig 3 is conveyed, along the jig return line L2, to the start position (entrance) of the coating line L1 where the work S to be coated is placed on the jig 3. Thereafter, similar operations are repeated.

The coating apparatus 100 includes an air pressure adjustment unit 115. Under control of a control apparatus 116, the air pressure adjustment unit 115 adjusts the air pressure in the space in the chamber 7 of the coating unit 111. The air pressure adjustment unit 115 includes a pipe 80 that communicates with the interior of a lower chamber member 72, a pipe 81 that communicates with the interior of an upper chamber member 71, a depressurizing unit 82, a valve 820, and a valve 821. The depressurizing unit 82 includes a pump 822 and a depressurizing tank 823, and the depressurizing tank 823 is depressurized by the pump 822. The depressurizing unit 82 may be composed only of the pump 822. By providing the depressurizing tank 823, the interior of the chamber 7 can be depressurized in a relatively short period of time with use of the pump 822, which has a relatively low output. The pipe 80 communicates with the depressurizing tank 823, and the pipe 81 communicates with the depressurizing tank 823 via the valve 821, a pipe 83, and the valve 820.

The valve 820 switches the state of communication between the pipe 80 and the depressurizing tank 823. The valve 821 switches the state of communication among the pipe 81, the pipe 83, and a pipe 84. The pipe 84 is opened to the atmosphere. The valve 821 can switch to a state in which the pipe 81 communicates only with the pipe 83, and a state in which the pipe 81 communicates only with the pipe 84.

The coating apparatus 100 includes a control unit 116 that controls the entire coating apparatus 100. The control unit 116 includes, a processing unit, a storage unit, an input/output interface (I/O), a display unit, and an input unit. The processing unit is a processor, which is typically a CPU, and controls the entire coating apparatus 100 by executing programs stored in the storage unit. The storage unit is a storage device, such as a ROM, a RAM, and an HDD, and stores various types of control information in addition to programs executed by the processing unit. The input/output interface is an interface that transmits/receives signals between the processing unit and external devices (an actuator, such as a motor, and a sensor). The display unit is a display that displays information for a user. The input unit is a key switch that is intended for the user to input instructions. The display unit and the input unit may be configured by a touch panel.

Further, the coating apparatus 100 includes an air supply unit 117 and an air exhaust unit 118. The air supply unit 117 supplies air to the insides of the dust removal area A and the coating area B so that the pressures inside the dust removal area A and the coating area B are positive pressures relative to the atmospheric pressure. Further, the air exhaust unit 118 performs air exhaust so that the pressure inside the removal area C is a negative pressure relative to the atmospheric pressure. Note that there is fluid communication between the space in which the first operator 901 is present and the dust removal area A. Similarly, there is fluid communication between the dust removal area A and the coating area B, fluid communication between the coating area B and the removal area C, and fluid communication between the removal area C and the space in which the conveyance unit 115 is present. Note that although the dust removal area A and the coating area B are separated by a divider 123, there is fluid communication spatially therebetween.

### <Coating Unit>

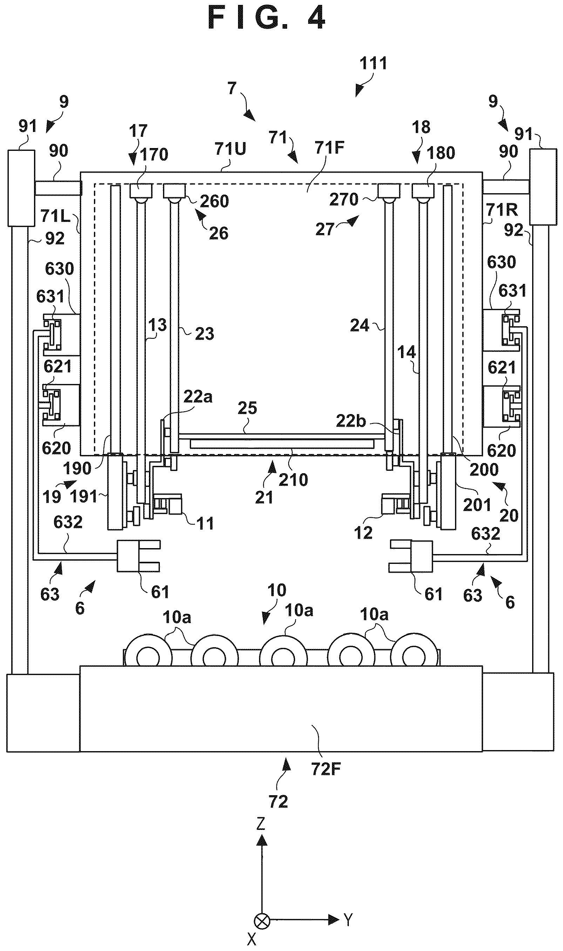

Next, each configuration included in the coating unit 111 will be described with reference to FIG. 4 in addition to FIGS. 1 to 3. FIG. 4 is a diagram of the chamber 7 of the coating unit when viewed from the accommodation unit 104 side.

The coating unit 111 includes a film moving unit 6 that moves the film F, and a chamber 7 that delimits a coating space in which the work S to be coated is arranged. The chamber 7 includes an upper chamber member 71 and a lower chamber member 72. The film moving unit 6 is mounted on the upper chamber member 71, and is raised/lowered in the Z direction in synchronization with the upper chamber member 71. The film moving unit 6 performs a conveyance operation of conveying the film F above the work S to be coated that has been conveyed to the interior of the chamber 7 at the time of the coating operation. Further, the film moving unit 6 includes a leading end gripping unit 60, a trailing end gripping unit 61, a first moving mechanism 62, and a second moving mechanism 63.

The leading end gripping unit 60 grips the leading end of the film F. The leading end of the film F is a portion at an end that has been pulled out in a direction orthogonal to an axial direction of the film F, which is wound into a roll. The leading end gripping unit 60 grips both end portions of the film F in the Y direction at the leading end of the film F. Note that the leading end gripping unit 60 may grip the entire width direction of the film F at the leading end of the film F. Further, the leading end gripping unit 60 can switch between a gripping state in which the leading end of the film F is gripped and a release state in which the leading end of the film F is not gripped but released. Further, the leading end gripping unit 60 is supported by the first moving mechanism 62 through support members 622 that movably support the leading end gripping unit 60. As will be described later, the leading end gripping unit 60 is moved by the first moving mechanism 62 while gripping the leading end of the film F so as to cover the work W to be coated. Then, the trailing end gripping unit 61 grips the trailing end of the film F. The trailing end gripping unit 61 grips both end portions of the film F in the Y direction at the trailing end of the film F. Note that the trailing end gripping unit 61 may grip the entire width direction of the film F at the trailing end of the film F. Further, the trailing end gripping unit 61 can switch between a gripping state in which the trailing end that has been pulled out in a direction orthogonal to the axial direction of the rolled film F is gripped and a release state in which the trailing end of the film F is not gripped but released. Further, the trailing end gripping unit 61 is supported by the second moving mechanism 63 through support members 632 that movably support the trailing end gripping unit 61.

The first moving mechanism 62 is capable of moving the leading end gripping unit 60 in the X direction in which the film F is conveyed above the work S to be coated and in a direction opposite to the X direction. More specifically, the first moving mechanism 62 includes rails 620, which are capable of moving the leading end gripping unit 60 in the X direction and in the direction opposite to the X direction. That is, the first moving mechanism 62 is guide members that guide the movement of the leading end gripping unit 60 in the X direction in which the film F is conveyed above the work S to be coated and in the direction opposite to the X direction.

As illustrated in FIGS. 2 and 4, a rail 620 is provided on each of the side wall portions 71R and 71L outside the upper chamber member 71. Further, the rails 620 are provided along the X direction of the chamber 7 and so as to protrude from the upper chamber member 71. That is, the rails 620 are longer than the upper chamber member 71 in the X direction. With this, when the upper chamber member 71 is lowered and comes into contact with a lower chamber member 72, the leading end gripping unit 60 can be moved out of the chamber 7.

As illustrated in FIGS. 3 and 4, the first moving mechanism 62 includes first control mechanisms 621 in the rails 620. A first control mechanism 621 may be, an electric actuator, an electric cylinder, an electric ball screw mechanism, and the like. By the first control mechanisms 621 controlling to move the support members 622, which support the leading end gripping unit 60, the leading end gripping unit 60 can move in the X direction and in the direction opposite to the X direction.

The second moving mechanism 63 can move the trailing end gripping unit 61 in the X direction and in the direction opposite to the X direction. The second moving mechanism 63 includes rails 630, which are capable of moving the trailing end gripping unit 61 in the X direction and in the direction opposite to the X direction. That is, the second moving mechanism 63 is guide members that guide the movement of the trailing end gripping unit 61 in the X direction and in the direction opposite to the X direction.

As illustrated in FIGS. 2 and 4, the rails 630 are provided on both side wall portions 71R and 71L at the outer side of the upper chamber member 71. Further, the rails 630 are provided along the X direction, and are provided so as to project from the upper chamber member 71 toward the accommodation unit 104 side. In this way, the trailing end gripping unit 61 can be moved to the outside of the chamber 7 when the upper chamber member 71 is lowered and comes into contact with the lower chamber member 72.

As illustrated in FIG. 4, the second moving mechanism 63 includes second control mechanisms 631, which control the movement of the trailing end gripping unit 61, in the rails 630. A second control mechanism 631 may be a driving device, such as an electric actuator, an electric cylinder, and an electric ball screw mechanism. By the second control mechanisms 631 controlling to move the support members 632, which support the trailing end gripping unit 61, the trailing end gripping unit 61 can be moved in the X direction and in the direction opposite to the X direction.

The upper chamber member 71 includes a front wall portion 71F, a rear wall portion 71B, the side wall portion 71R, the side wall portion 71L, and an upper wall portion 71U and is open on the lower side. The rails 620 are provided on the side wall portion 71R and the side wall portion 71L. Further, the rails 630 are provided on the side wall portion 71R and the side wall portion 71L. That is, the upper chamber member 71 is a member that movably supports the leading end gripping unit 60 and the trailing end gripping unit 61.

Further, the lower chamber member 72 is provided below the upper chamber member 71, and the work S to be coated is to be placed thereon. The lower chamber member 72 includes a front wall portion 72F, a rear wall portion 72B, a side wall portion 72R, a side wall portion 72L, and a lower wall portion 72D and is open on the upper side.

As illustrated in FIGS. 2 to 4, the coating unit 111 includes a displacement unit 9 that displaces the upper chamber member 71 and the lower chamber member 72 relative to each other. The displacement unit 9 includes support members 90, moving mechanisms 91, and rails 92. The support members 90 support the upper chamber member 71 in such a manner that the upper chamber member 71 is movable in the vertical direction of the coating unit. The moving mechanisms 91 move the support members 90 in the vertical direction of the coating unit 111. That is to say, the displacement unit 9 displaces a first continuous structure 13 and a second continuous structure 14, which will be described later, and the work S to be coated relative to each other by raising or lowering the upper chamber member 71. The moving mechanisms 91 may be such driving apparatuses as electric actuators, electric cylinders, and electric ball screw mechanisms. The rails 92 extend continuously in the Z direction, and guide the movement of the moving mechanisms 91 in the Z direction. Further, the interior of the chamber 7 can be sealed as a result of the upper chamber member 71 being lowered by the displacement unit 9 and coming into contact with the lower chamber member 72. Although the present embodiment has been described in relation to a configuration in which the displacement unit 9 raises or lowers the upper chamber member 71 relative to the lower chamber member 72, a configuration in which the lower chamber member 72 is raised or lowered relative to the upper chamber member 71 may be taken.

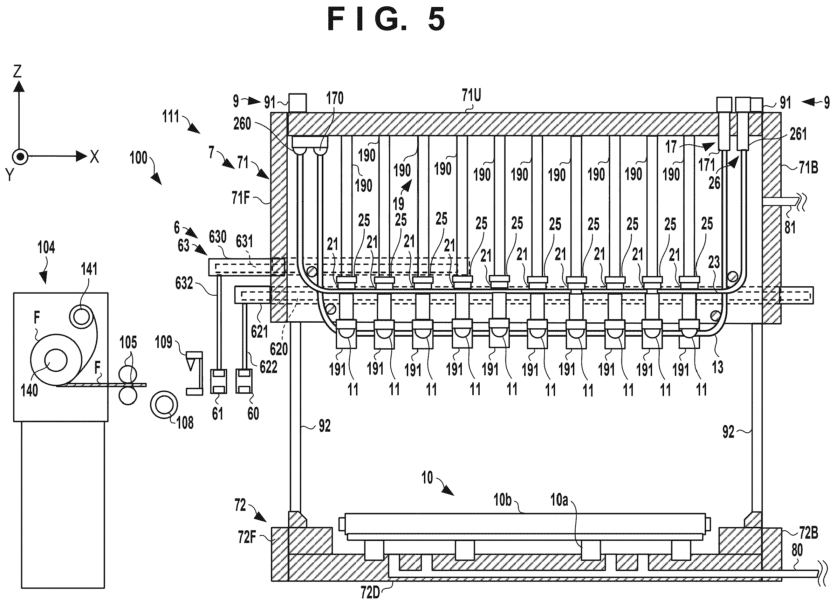

As illustrated in FIG. 2, the coating unit 111 includes a work moving unit 10 in the chamber 7. FIG. 5 will now be referred to in addition to FIGS. 2 to 4. FIG. 5 is a cross-sectional view of the chamber 7 for describing the interior of the chamber 7.

The work moving unit 10 is provided in the lower chamber member 72. The work moving unit 10 includes a work elevating unit 10a and a work conveyance unit 10b, which is supported by the work elevating unit 10a. The work elevating unit 10a can raise/lower a work S to be coated that has been conveyed into the chamber 7 in the vertical direction of the coating unit 111 to adjust the position of the work S to be coated or bring the work S to be coated into contact with the film F. The work conveyance unit 10b conveys the work S to be coated by using a plurality of rotatable rollers. The work elevating unit 10a and the work conveyance unit 10b may be actuators, such as electric cylinders and electric ball screw mechanisms.

As illustrated in FIG. 2, the coating unit 111 includes a plurality of first contact members 11, a plurality of second contact members 12, the first continuous structure 13, and the second continuous structure 14 in the chamber 7.

The plurality of first contact members 11 are arranged along a first side of the film F, which has been conveyed above the work S to be coated and come into contact with the first side. The plurality of second contact members 12 are arranged along a second side of the film F that is opposite to the first side and come into contact with the second side. The plurality of first contact members 11 and the plurality of second contact members 12 are arranged at positions opposite to each other. Note that the number of the plurality of first contact members 11 and the number of the plurality of second contact members are not limited to the example illustrated in the drawings and may be changed as appropriate.

The first continuous structure 13 is a member that extends continuously in a direction along the first side of the film F, supports the plurality of first contact members 11, and can be deformed in a contact/separation direction in which the plurality of first contact members 11 come into contact with/separate from the film F.

The second continuous structure 14 is a member that extends continuously in a direction along the second side of the film F, supports the plurality of second contact members 12, and can be deformed in a contact/separation direction in which the plurality of second contact members 12 come into contact with/separate from the film F. The extending direction of the first continuous structure 13 and the extending direction of the second continuous structure 14 are the conveyance direction of the film F.

In the coating operation, the above displacement unit 9 displaces the first continuous structure 13 and the second continuous structure 14, and a work S to be coated, relative to each other, such that the plurality of first contact members 11 and the plurality of second contact members 12 bring the film F into contact with the work S to be coated.

In the coating operation, the above displacement unit 9 displaces the first continuous structure 13 and the second continuous structure 14, and a work S to be coated, relative to each other, such that the plurality of first contact members 11 and the plurality of second contact members 12 bring the film F into contact with the work S to be coated.

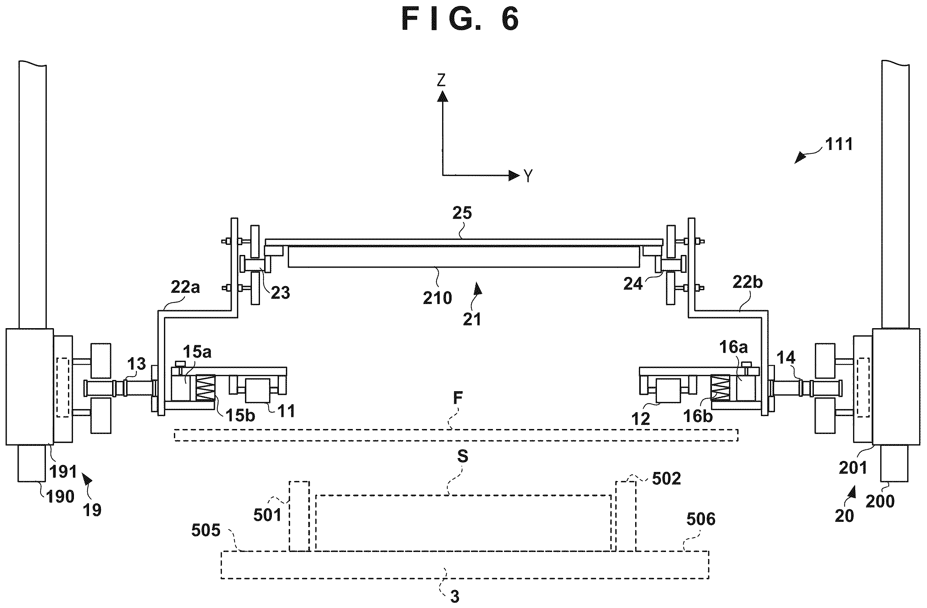

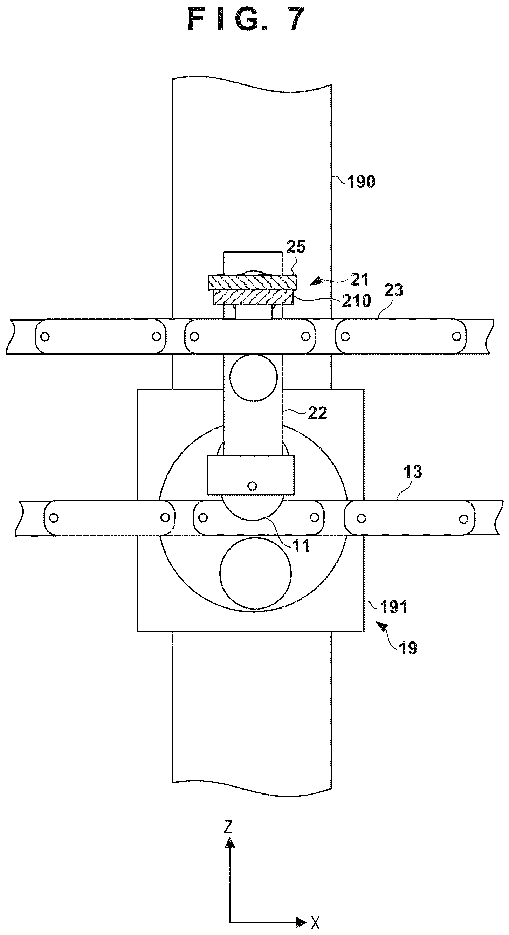

FIGS. 6 and 7 will now be referred to. FIG. 6 is a partial enlarged view of the interior of the chamber 7 when viewed along the X direction. Further, FIG. 7 is a partial enlarged view of the interior of the chamber 7 when viewed along the Y direction.

As illustrated in FIGS. 6 and 7, the first continuous structure 13 and the second continuous structure 14 are chains. The plurality of first contact members 11 are rotational members that are rotatably supported by the first continuous structure 13. The plurality of second contact members 12 are rotational members that are rotatably supported by the second continuous structure 14. A rotational member is, for example, a roller. By the members that come into contact with the film F being rotational members, it is possible to prevent the film F from getting rubbed when the plurality of first contact members 11 and the plurality of second contact members 12 come into contact with the film F.

As illustrated in FIG. 6, each of the plurality of first contact members 11 is provided on the first continuous structure 13 via a pressing member 15a and an elastic member 15b. Further, each of the plurality of second contact members 12 is provided on the second continuous structure 14 via a pressing member 16a and an elastic member 16b.

The pressing member 15a presses a first contact member 11 when the first contact member 11 comes into contact with the film F. Further, the pressing member 16a presses a second contact member 12 when the second contact member 12 comes into contact with the film F. The pressing member 15a and the pressing member 16a may be, actuators. The elastic member 15b and the elastic member 16b may be, springs. Some works S to be coated may include a concave curved portion. When the work S to be coated is coated with the film F, it may be difficult for each of the contact members 11 and 12 to come into contact with the film F at a concave curved portion of the work S to be coated. Meanwhile, by providing the pressing members 15a and 16a, it is possible to support the contact between each of the contact members 11 and 12 and the film F when each of the contact members 11 and 12 come into contact with the film F.

As illustrated in FIG. 2, the coating unit 111 includes a first suspension unit 17 and a second suspension unit 18 in the chamber 7.

As illustrated in FIG. 5, the first suspension unit 17 supports both ends of the first continuous structure 13 and suspends the first continuous structure 13. The first suspension unit 17 includes a first fixing member 170, which fixes one end of the first continuous structure 13 to the interior of the upper chamber member 71. The first suspension unit 17 further includes a first adjustment device 171, which adjusts the slack in the first continuous structure 13. The first adjustment device 171 is, for example, an electric cylinder.

In FIG. 5, the first suspension unit 17, which is on the first continuous structure 13 side, is illustrated, but the second suspension unit 18, which is on the second continuous structure 14 side, is similar (see FIGS. 2 and 4). That is, the second suspension unit 18 is provided in the upper chamber member 71. The second suspension unit 18 includes a second fixing member 180, which fixes one end of the second continuous structure 14 to the interior of the upper chamber member 71. The second suspension unit 18 further includes a second adjustment device 181, which adjusts the slack in the second continuous structure 14 (see FIG. 2). The second adjustment device 181 is, for example, an electric cylinder.

By the first adjustment device 171 being able to adjust the slack in the first continuous structure 13, the first continuous structure 13 can follow the shape of a work S to be coated. Further, by the second adjustment device 181 being able to adjust the slack in the second continuous structure 14, the second continuous structure 14 can follow the shape of a work S to be coated.

Note that the first adjustment device 171 and the second adjustment device 181 may be, lifting mechanisms that are provided on the upper wall portion 71U of the upper chamber member 71 and can be raised/lowered in the vertical direction in the upper chamber member 71.

As illustrated in FIGS. 4 to 7, the coating unit 111 further includes a first regulation unit 19. The first regulation unit 19 regulates displacement of the first continuous structure 13 in a direction different from the contact/separation direction. The first regulation unit 19 includes a plurality of rails 190, which are arranged in a first extending direction and extending in a first contact/separation direction, and sliders 191, which are engaged with the rails 190 and the first continuous structure 13 and are capable of being displaced along the rails 190. Further, the first regulation unit 19 includes support members that deformably support the first continuous structure 13. The support members may be, sprockets.

By restricting the displacement of the first continuous structure 13 in the direction different from the contact/separation direction by the first regulation unit 19, it is possible to prevent the positions of the first contact members 11 from being shifted from when the first contact members 11 first come into contact with the film F to when they finally come into full contact with the film F in the coating operation.

The coating unit 111 further includes a second regulation unit 20. The second regulation unit 20 regulates displacement of the second continuous structure 14 in a direction different from the contact/separation direction. The second regulation unit 20 includes a plurality of rails 200, which are arranged in a second extending direction and extending in a second contact/separation direction, and sliders 201, which are engaged with the rails 200 and the second continuous structure 14 and are capable of being displaced along the rails 200. Further, the second regulation unit 20 includes support members that deformably support the second continuous structure 14. The support members may be, sprockets.

By restricting the displacement of the second continuous structure 14 in the direction different from the contact/separation direction by the second regulation unit 20, it is possible to prevent the positions of the second contact members 12 from being shifted from when the second contact members 12 first come into contact with the film F to when they finally come into full contact with the film F in the coating operation.

As illustrated in FIGS. 4 to 7, the coating unit 111 includes heating units 21, which heat the film F, which has been conveyed above the work W to be coated, in the space in the chamber 7. The heating units 21 generate heat by, supply of electric power. By the heat of the heating units 21 softening the film F, the adhesion of the film F to a coated work S can be improved.

The heating units 21 has heaters 210, which are provided so as to correspond to the plurality of respective first contact members 11. The coating unit 111 includes connecting members 22a, which connect the heaters 210 with corresponding first contact members 11, respectively. A connecting member 22a is provided so as to connect a heating unit 21 and the first continuous structure 13. Further, the heating units 21 has heaters 210, which are provided so as to correspond to the plurality of respective second contact members 12. The coating unit 111 includes connecting members 22b, which connect the heaters 210 with corresponding second contact members 12, respectively. A connecting member 22b is provided so as to connect a heating unit 21 and the second continuous structure 14.

By the heaters 210 being connected with the corresponding respective contact members 11 and 12 by the connecting members 22a and 22b, it is possible to prevent distances between the heaters 210 and the respective contact members 11 and 12 from increasing when bringing the film F into contact with the work W to be coated. With this, the amount of heating of the film F does not greatly vary depending on the part of the work W to be coated, and it is possible to reduce variation in the amount of stretch in the film F.

As illustrated in FIGS. 4 to 6, the coating unit 111 includes a third continuous structure 23 and a fourth continuous structure 24. As described above, the plurality of first contact members 11 and the plurality of second contact members 12 are arranged at positions opposite to each other. The coating unit 111 includes bridge members 25, which connect the plurality of first contact members 11 and the plurality of second contact members 12. A heating unit 21 is provided for each combination of a first contact member 11 and a second contact member 12 and is provided on a bridge member 25. That is, the heating units 21 are supported by the third continuous structure 23, and the fourth continuous structure 24.

The third continuous structure 23 extends continuously in the first direction along the first side of the film F. The third continuous structure 23 is, for example, a chain. The third continuous structure 23 is suspended by a third suspension unit 26, which is provided on the upper wall of the upper chamber member 71. The third suspension unit 26 is a unit that supports both ends of the third continuous structure 23 and suspends the third continuous structure 23. The third suspension unit 26 includes a third fixing member 260, which fixes one end of the third continuous structure 23, and a third adjustment device 261, which adjusts the slack in the third continuous structure 23. The third adjustment device 261 is, for example, an electric cylinder.

As described above, the heating units 21 are connected to the corresponding first contact members 11 by the connecting members 22a. That is, the third continuous structure 23 is connected to the first continuous structure 13 via the connecting members 22a. With this, the third continuous structure 23 deforms in synchronization with the first continuous structure 13.

The fourth continuous structure 24 extends continuously in the second direction along the second side of the film F. The fourth continuous structure 24 is, for example, a chain. The fourth continuous structure 24 is suspended by a fourth suspension unit 27, which is provided on the upper wall of the upper chamber member 71. The fourth suspension unit 27 is a unit that supports both ends of the fourth continuous structure 24 and suspends the fourth continuous structure 24. The fourth suspension unit 27 includes a fourth fixing member 270, which fixes one end of the fourth continuous structure 24, and a fourth adjustment device 271, which adjusts the slack in the fourth continuous structure 24. The fourth adjustment device 271 is, for example, an electric cylinder.

As described above, the heating units 21 are connected to the corresponding second contact members 12 by the connecting members 22b. That is, the fourth continuous structure 24 is connected to the second continuous structure 14 via the connecting members 22b. With this, the fourth continuous structure 24 deforms in synchronization with the second continuous structure 14.

### <Exemplary Operation>

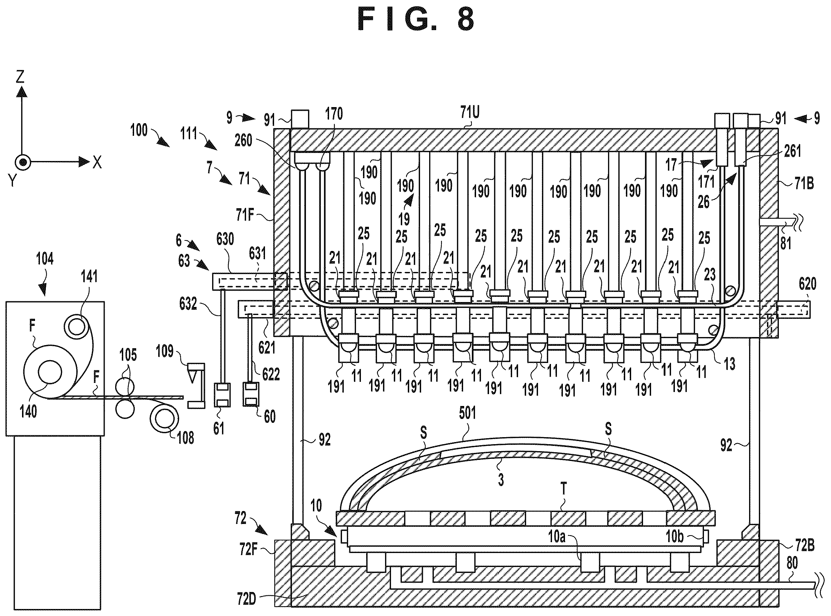

An exemplary operation of the coating apparatus 100 in the coating area B will be described with reference to FIGS. 8 to 17. FIGS. 8 to 17 are diagrams for describing an operation of the coating apparatus 100, and illustrate an example of an operation of carrying in the film F and the work S to be coated, coating of the work S to be coated with the film F, and carrying out the coated work W that has been coated with the film F.

### <Operation of Conveying Work to be Coated, and Operation of Decorating Film>

FIG. 8 will be referred to. FIG. 8 illustrates a state in which the work S to be coated has been conveyed to the interior of the chamber 7. Further, FIG. 8 illustrates a state in the midst of conveyance of the film F to the coating unit 111. The work S to be coated is conveyed onto the work moving unit 10, which is provided in the lower chamber member 72, by the above-described conveyance unit 102. After the work S to be coated has been conveyed to the interior of the chamber 7, the work moving unit 10 may adjust the position of the work S to be coated. The work S to be coated is carried in to the interior of the chamber 7 in a state in which the displacement unit 9 has raised the upper chamber member 71, and the upper chamber member 71 and the lower chamber member 72 are separated from each other.

When the work S to be coated has been conveyed to the interior of the chamber 7, the conveyance rollers 105 hold therebetween the rolled film F accommodated in the accommodation unit 104, and starts the conveyance of the film F. Note that the conveyance rollers 105 may start the conveyance of the film F before the work S to be coated is conveyed to the interior of the chamber 7. Thereafter, a release film layered on the back surface of the film F is taken up by the take-up roller 108 from the film F.

### <Operation of Conveying Film to Interior of Chamber>

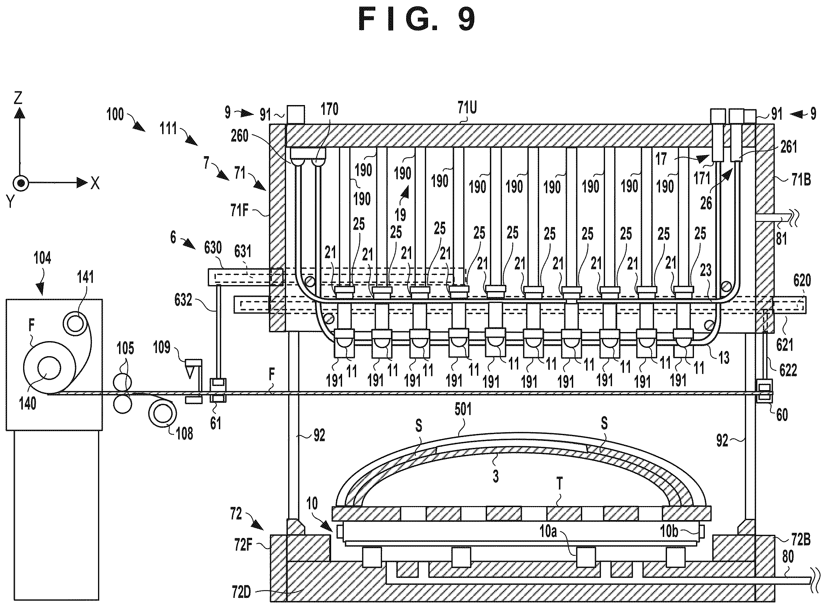

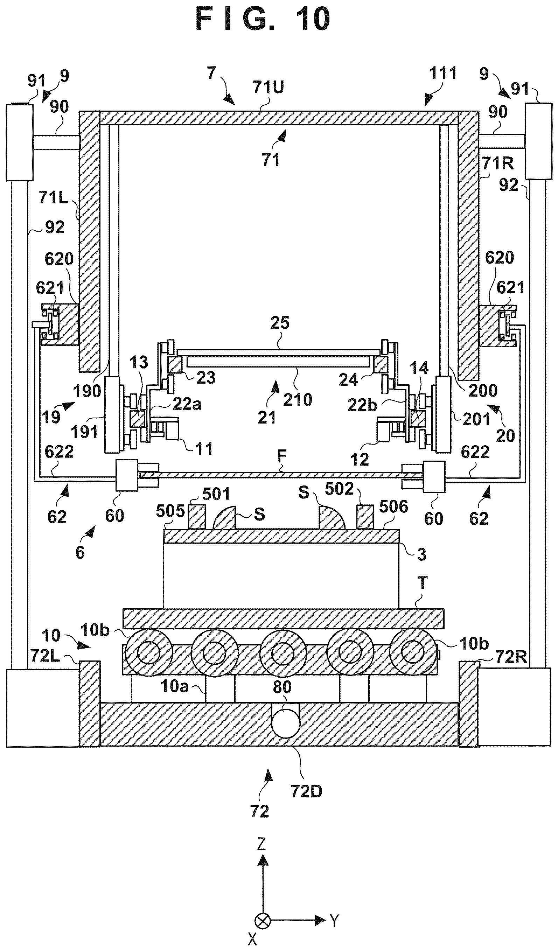

Next, FIGS. 9 and 10 will be referred to. FIG. 9 illustrates a state in which the film F has been conveyed to the interior of the chamber 7. FIG. 10 illustrates the interior of the chamber 7 of FIG. 9 in the X direction. The film moving unit 6 conveys the film F above the work S to be coated. Specifically, the leading end gripping unit 60 grips the leading end of the film F conveyed from the accommodation unit 104. Then, with the first moving mechanism 62, the leading end gripping unit 60 moves in the X direction such that the film F covers the work S to be coated. The first control mechanisms 621 may control the movement of the leading end gripping unit 60 based on the shape (size) of the work S to be coated detected by the detection unit 110.

### <Operation of Cutting Film>

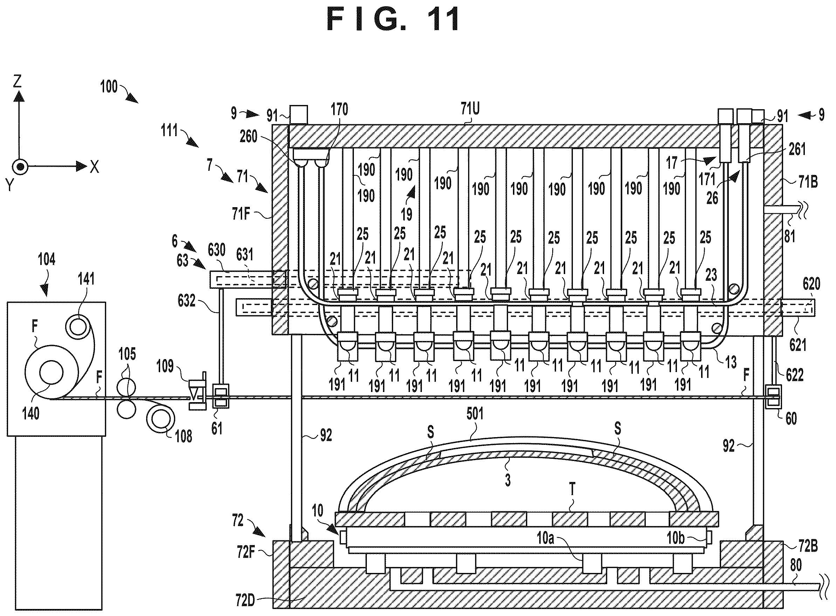

FIG. 11 will be referred to. FIG. 11 illustrates a state in which the trailing end gripping unit 61 grips the film F and the cut unit 109 has cut the film F. After the leading end gripping unit 60 has moved in the X direction, the trailing end gripping unit 61 grips the trailing end of the film F. Further, the cut unit 109 cuts the film F between the trailing end gripping unit 61 and the accommodation unit 104. This can prevent the film F that is unnecessary for coating from being pulled out from the accommodation unit 104.

### <Film Moving Operation>

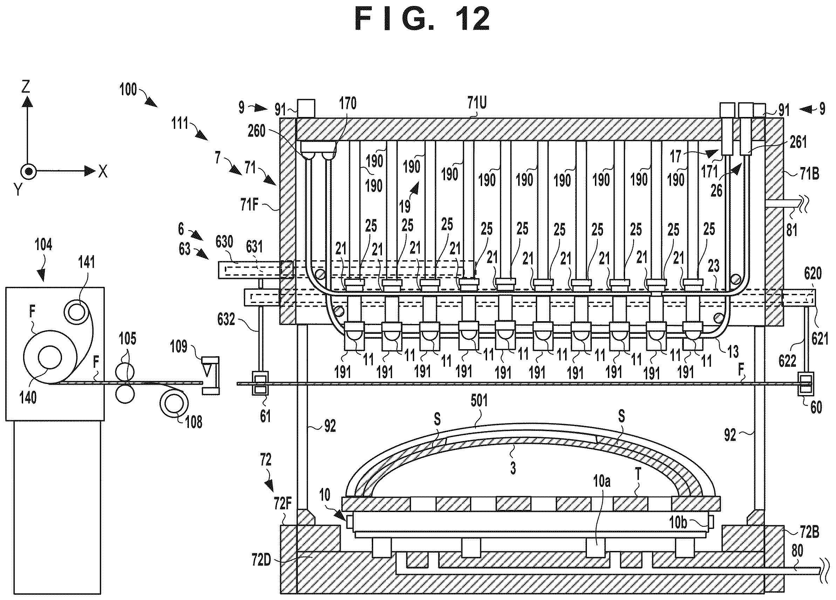

FIG. 12 will be referred to. FIG. 12 illustrates a state in which the film F gripped by the leading end gripping unit 60 and the trailing end gripping unit 61 is moved.

The leading end gripping unit 60 and the trailing end gripping unit 61 move the film F. With the first moving mechanism 62, the leading end gripping unit 60 moves in the X direction in a state in which it is gripping the leading end of the film F. With the second moving mechanism 63, the trailing end gripping unit 61 moves in the X direction in a state in which it is gripping the trailing end of the film F. In the conveyance operation of conveying the film F in the X direction, the leading end gripping unit 60 and the trailing end gripping unit 61 move so as to apply tension to the film F. Note that a state in which tension is applied to the film F is a state in which tension is applied to the extent that the film does not undergo plastic deformation or does not rupture. That is to say, the leading end gripping unit 60 and the trailing end gripping unit 61 convey the film F in a state in which the film F is spread out in a planar fashion. This can prevent the work S to be coated from being coated with the film F in a state in which wrinkles have occurred in the film F. The first control mechanisms 621 may perform control to start moving the leading end gripping unit 60 first, before the trailing end gripping unit 61, in the X direction. Before the leading end gripping unit 60 and the trailing end gripping unit 61 perform the conveyance operation, the second control mechanisms 631 may apply tension to the film F by performing control to move the trailing end gripping unit 61 in the direction opposite to the X direction.

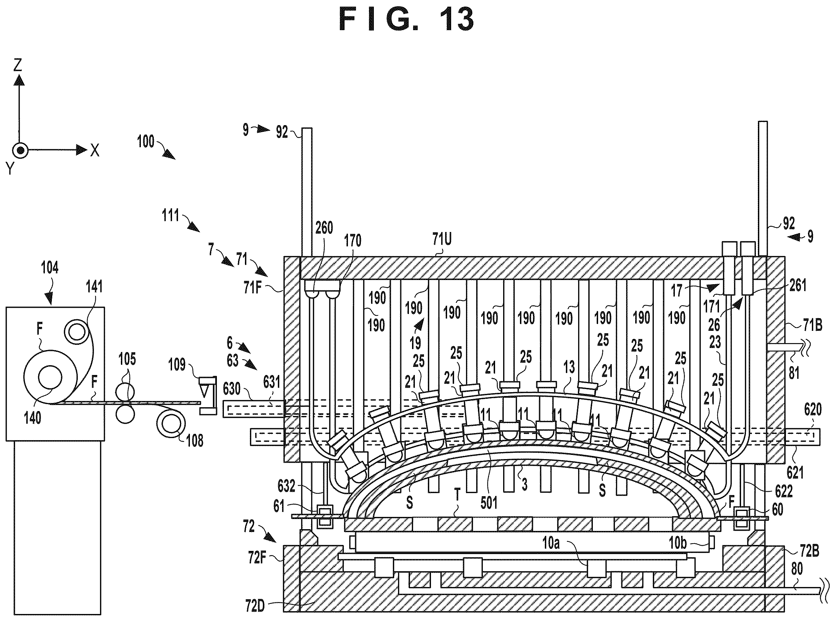

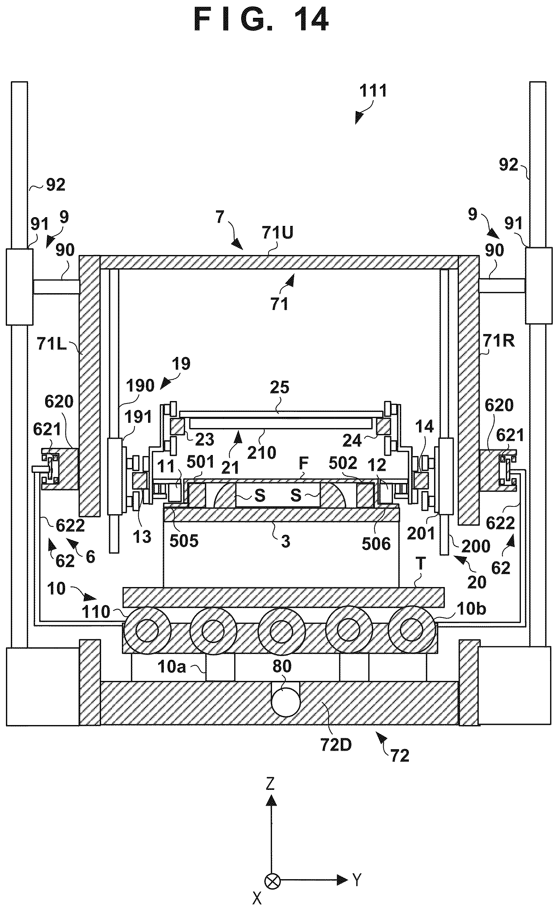

FIGS. 13 and 14 will be referred to. FIG. 13 illustrates a state in which the coating unit 111 brings the film F into contact with the work W to be coated. FIG. 14 illustrates the interior of the chamber 7 in the X direction of FIG. 11.

The displacement unit 9 displaces the upper chamber member 71 and the lower chamber member 72 relative to each other. More specifically, the displacement unit 9 lowers the upper chamber member 71 toward the lower chamber member 72. When the displacement unit 9 displaces the upper chamber member 71 and the lower chamber member 72 relative to each other, the plurality of first contact members 11 come into contact with the first side of the film F, and the plurality of second contact members 12 come into contact with the second side of the film F.

When the plurality of first contact members 11 come into contact with the film F, the first continuous structure 13 deforms in the first contact/separation direction in which the plurality of first contact members 11 come into contact with/separate from the film F. As illustrated in FIG. 13, the first continuous structure 13 can be deformed along the jig J, which includes a placement surface that follows the shape of the work W to be coated. FIG. 13 illustrates a configuration on the first continuous structure 13 side, but it is similar for a configuration on the second continuous structure 14 side. That is, when the plurality of second contact members 12 come into contact with the film F, the second continuous structure 14 deforms in the second contact/separation direction in which the plurality of second contact members 12 come into contact with/separate from the film F. The second continuous structure 14 can be deformed along the jig J, which includes the placement surface that follows the shape of the work S to be coated.

The plurality of first contact members 11 are supported by the first continuous structure 13, which can be deformed in the first contact/separation direction in which the plurality of first contact members 11 come into contact with/separate from the film F. With this, an interval between points at which the plurality of first contact members 11 are in contact with the film F can be made substantially uniform. Further, the plurality of second contact members 12 are supported by the second continuous structure 14, which can be deformed in the second contact/separation direction in which the plurality of second contact members 12 come into contact with/separate from the film F. With this, an interval between points at which the plurality of second contact members are in contact with the film F can be made substantially uniform. Therefore, it is possible to reduce variation in the amount of stretch in the film F that depends on the part of the coated work W.

That is, the displacement unit 9 displaces the first continuous structure 13 and the second continuous structure 14, and the work S to be coated, relative to each other such that the plurality of first contact members 11 and the plurality of second contact members 12 bring the film F into contact with the work S to be coated. Further, the displacement unit 9 displaces the leading end gripping unit 60 and the work S to be coated relative to each other such that the film F comes into contact with the work S to be coated. Further, the displacement unit 9 displaces the film F gripped by the leading end gripping unit 60 and the trailing end gripping unit 61, and the work S to be coated, relative to each other by raising or lowering the upper chamber member 71.

Further, as illustrated in FIG. 13, after the film F and the work S to be coated start to come into contact, before full contact is made, the leading end gripping unit 60 moves in the direction opposite to the X direction. That is, after the film F and the work S to be coated start to come into contact, the leading end gripping unit 60 moves in the direction opposite to the X direction as guided by the guide members (rails 620). When the film F and the work S to be coated have started to come into contact, the first control mechanisms 621 may perform control to move the support members 622, which support the leading end gripping unit 60, in the direction opposite to the X direction. Alternatively, the first control mechanisms 621 may be configured to release control of the movement of the leading end gripping unit 60, such that a state in which the friction with the support members 622 and the rails 620 is small is entered, and allow the leading end gripping unit 60 to be moved by the tension of the film F. That is to say, the leading end gripping unit 60 is not limited to being moved by the first control mechanisms 621, and may be in a form in which it moves in the direction opposite to the X direction due to deformation of the film F when coating the work S to be coated with the film F. In this way, when the film F and the work S to be coated have come into contact, the leading end gripping unit 60 moves in the direction opposite to the X direction. As a result, when the film F comes into contact with the work S to be coated, the film F can be prevented from being stretched by the leading end gripping unit 60 gripping the leading end of the film F.

Further, after the film F and the work S to be coated start to come into contact, before full contact is made, the trailing end gripping unit 61 moves in the X direction. When the film F and the work S to be coated have started to come into contact, the second control mechanisms 631 may perform control to move the support members 632, which support the trailing end gripping unit 61, in the X direction. Alternatively, the second control mechanisms 631 may be configured to release control of the movement of the trailing end gripping unit 61, such that a state in which the friction with the rails 630 is small is entered, and allow the leading end gripping unit 60 to be moved by the tension of the film F. In this way, when the film F and the work S to be coated have come into contact, the trailing end gripping unit 61 moves in the X direction. As a result, when the film F comes into contact with the work S to be coated, the film F can be prevented from being stretched by the trailing end gripping unit 61 gripping the trailing end of the film F. Therefore, it is possible to further prevent variation in the amount of stretch in the film F that depends on the part of the work S to be coated.

A part of the film F coming into contact with the work S to be coated may be assumed as the start of contact. Further, the film F coating the entire work S to be coated after a part of the film F comes into contact with the work S to be coated may be assumed as full contact. More specifically, the upper chamber member 71 being lowered by the displacement unit 9 to a first height with respect to the lower chamber member 72 may be assumed as the start of contact. Further, the upper chamber member 71 being lowered by the displacement unit 9 to a second height, which is lower than the first height, with respect to the lower chamber member 72 may be assumed as full contact. The first height and the second height may be values set in advance according to, the size, shape, and the like of the work S to be coated.

Further, the leading end gripping unit 60 and the trailing end gripping unit 61 move so as to apply tension to the film F in a contact operation of bringing the film F into contact with the work W to be coated. The leading end gripping unit 60 may move in the direction opposite to the X direction at a speed that does not interfere with the contact operation and is lower than a speed at which the displacement unit 9 lowers the upper chamber member 71, under the control of the first control mechanisms 621. Further, the trailing end gripping unit 61 may move in the X direction at a speed that does not interfere with the contact operation and is lower than a speed at which the displacement unit 9 lowers the upper chamber member 71, under the control of the second control mechanisms 631. Thus, by the leading end gripping unit 60 and the trailing end gripping unit 61 moving so as to apply tension to the film F, it is possible to prevent wrinkles from occurring in the film F.

Further, as illustrated in FIGS. 13 and 14, in the present embodiment, the jig 3 includes a first protrusion portion 501 extending continuously along a first side of the film F, and a first contacted portion 505 which is at the outer side of the first protrusion portion 501 (opposite to the side at which the work S to be coated is placed), and which is smaller in height than the first protrusion portion 501. Further, the jig 3 includes a second protrusion portion 502 extending continuously along a second side of the film F, and a second contacted portion 506 which is at the outer side of the second protrusion portion 502 (opposite to the side at which the work S to be coated is placed), and which is smaller in height than the second protrusion portion 502. In addition, as illustrated in FIG. 14, the plurality of first contact members 11 come into contact with the first contacted portion 505 via the film F, and the plurality of second contact members 12 come into contact with the second contacted portion 506 via the film F. With this configuration, the airtightness of the sealed space surrounded by the film F and the jig 3 on which the work S to be coated is placed can be increased. This can increase the adhesion of the film F to the work S to be coated when the air pressure adjustment unit 115 adjusts the air pressure of the interior of the chamber 7.

### <Coating Operation>

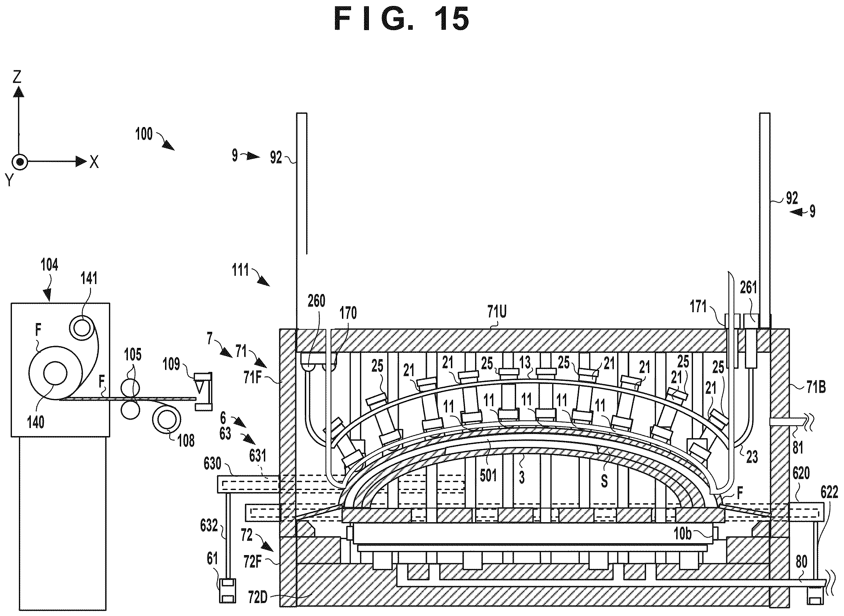

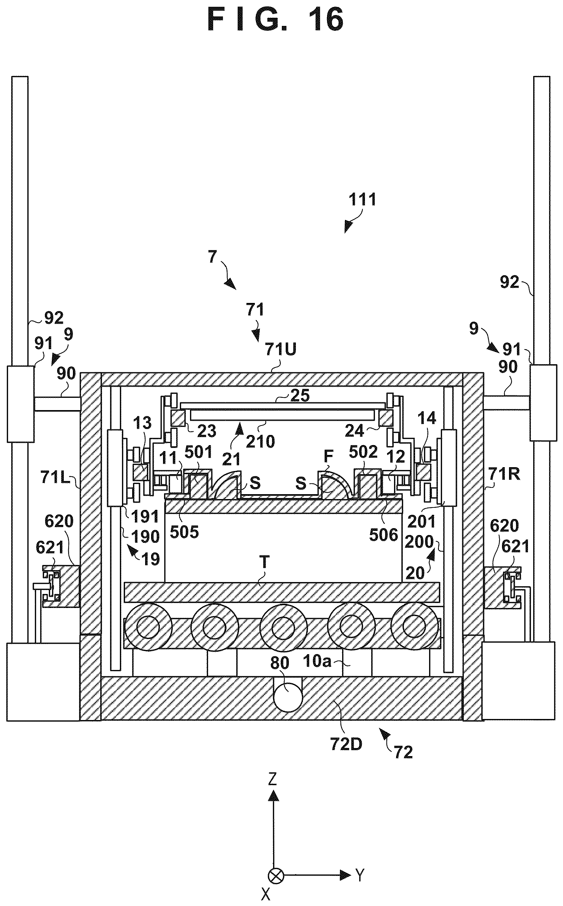

FIGS. 15 and 16 will be referred to. FIG. 15 illustrates a state in which the work W to be coated is coated with the film F. FIG. 16 illustrates the interior of the chamber 7 in the X direction of FIG. 15.

As the rails 620 project from the upper chamber member 71, the first moving mechanism 62 can cause the leading end gripping unit 60 to move out of the upper chamber member 71 in the X direction. After the plurality of first contact members 11 and the plurality of second contact members 12 come into full contact with the film F, the leading end gripping unit 60 releases the grip on the film F, and moves in the X direction so as to be located outside the upper chamber member 71. Further, as the rails 630 project to the accommodation unit 104 side, the second moving mechanism 63 can cause the trailing end gripping unit 61 to move out of the upper chamber member 71 in the direction opposite to the X direction. After the plurality of first contact members 11 and the plurality of second contact members 12 come into full contact with the film F, the trailing end gripping unit 61 releases the grip on the film F, and moves in the direction opposite to the X direction so as to be located outside the upper chamber member 71. Then, after the leading end gripping unit 60 and the trailing end gripping unit 61 have moved out of the upper chamber member 71, the displacement unit 9 lowers the upper chamber member 71 so that the upper chamber member 71 and the lower chamber member 72 come into contact.

After the plurality of first contact members 11 and the plurality of second contact members 12 come into full contact with the film F, the leading end gripping unit 60 and the trailing end gripping unit 61 release the grip on the film F. With this, it is possible to prevent the ends of the film F from being stretched when adhering the film F to the work S to be coated by the air pressure difference in the chamber 7. Further, by the leading end gripping unit 60 and the trailing end gripping unit 61 moving out of the upper chamber member 71, when the upper chamber member 71 and the lower chamber member 72 are brought into contact, it is possible to prevent the leading end gripping unit 60 and the trailing end gripping unit 61 from coming into contact with the lower chamber member 72.

When the upper chamber member 71 and the lower chamber member 72 come into contact and a state in which the interior of the chamber 7 is sealed is entered, the air pressure adjustment unit 115 adjusts the air pressure in the chamber 7. More specifically, the air pressure adjustment unit 115 adjusts, in the space (coating space) surrounded by the upper chamber member 71 and the lower chamber member 72, the air pressure between the sealed space, which is surrounded by the film F and the jig 3 on which the work S to be coated is placed, and an outer space, which is outside the sealed space. The air pressure adjustment unit 115 depressurizes the space in the chamber 7. Here, after the valve 821 is switched to a state in which the pipe 81 and the pipe 83 communicate, the valve 820 is switched to a state in which the pipe 83 and the depressurizing tank 823 communicate (see FIG. 1). The air in the space in the chamber 7 is exhausted from the pipes 81 and 83, and both the sealed space and the outer space are depressurized. Further, after the chamber 7 enters a closed state, the heating units 21 are heated to heat the film F. The film F is softened and enters a state in which it is easily stretched.

Next, the valve 821 is switched to a state in which the pipe 81 and the pipe 84 communicate. In the space (coating space) in the chamber 7, the outer space, which is above the film F is opened to the atmosphere via the pipe 84, and an air pressure difference is generated between the sealed space and the outer space. The film F is suctioned to the sealed space side by the air pressure difference. The adhesion of the film F to the work S to be coated is increased, and the film F is stretched and adhered to the fine protruded/recessed shapes of the coated work S. That is, the work S to be coated is coated with the film F. As described above, in the present embodiment, since variation in the amount of stretch in the film F that depends on the part of the coated work S is reduced, unevenness in the amount of stretch in the film F that depends on the part is reduced also during the adhesion. Note that the air pressure adjustment unit 115 may be configured to further include a configuration, such as a compressor that pressurizes the outer space above the film F and, by pressurizing the outer space, increases the difference in air pressure between the outer space and the sealed space when the work S to be coated is coated with the film F.

### <Carry Out Operation>

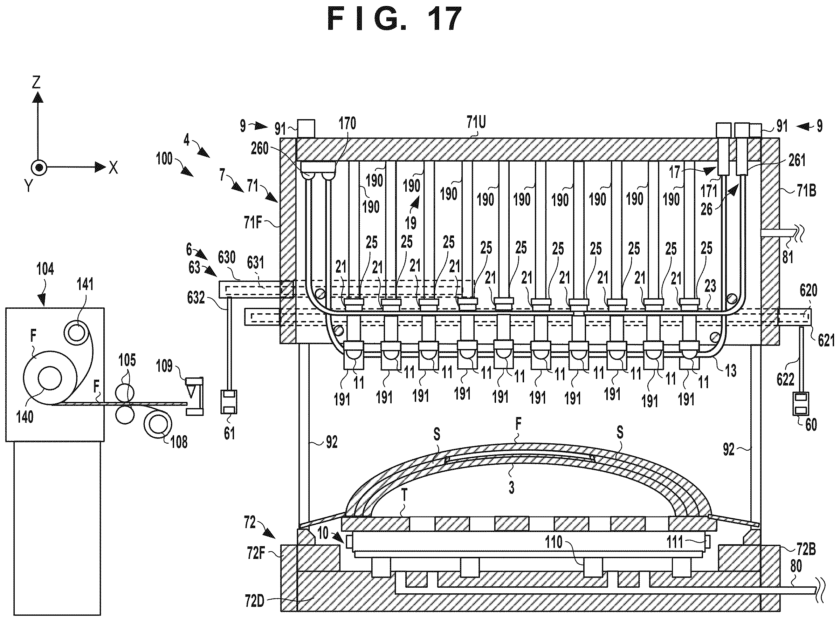

FIG. 17 will be referred to. FIG. 17 illustrates a state in which the coated work S that has been coated with the film F is carried out. After the work S to be coated has been coated with the film F, the displacement unit 9 raises the upper chamber member 71. After the upper chamber member 71 has been raised, the film moving unit 6 carries out the coated work S that has been coated with the film F to the outside of the chamber 7. When carrying out the coated work S, the film moving unit 6 may adjust the height of the conveyance table T so that the conveyance table T is aligned with the conveyance unit 112. This concludes the coating operation.

### <Detailed Configuration of Jig>

A detailed configuration of the jig 3 according to the present embodiment will be described with reference to FIG. 18. FIG. 18 is a diagram illustrating a detailed configuration of the jig 3. In FIG. 18, half of the jig 3 from the center thereof is illustrated; however, in practice, the jig 3 is similarly configured on the opposite side as well. The jig 3 is a jig 3 that is used when coating the work S to be coated with the film F inside the chamber 7 that can be held in a depressurized state. The jig 3 holds the work S to be coated when coating the work S to be coated with the film F. The jig 3 is a jig 3 that supports a member for a vehicle as the work S to be coated. A member for a vehicle is a member for a four-wheeled vehicle (an exterior member or an interior member). FIG. 18 exemplarily illustrates a front bumper or a rear bumper as a member for a vehicle. Note that a member for a vehicle may be a hood, a roof, a pillar, a door, a fender, a side sill, a mirror cover, a fuel filler cover, a floor panel, a dashboard, an armrest, a glove box, an emblem, or the like.

The jig 3 includes a base member 5, and a placement member 4 on which the work S to be coated is placed. The base member 5 is a member for supporting the placement member 4 from below the placement member 4. The placement member 4 is arranged between the work S to be coated and the base member 5. Further, the placement member 4 is attachably and detachably mounted on the base member 5. The placement member 4 is a member that can be exchanged in accordance with the type (shape) of the work S to be coated, and is prepared for each shape of the work S to be coated. The base member 5 is a member that can be commonly used on the coating line L1 and the jig return line L2 regardless of the type of the work S to be coated. Such a configuration of the jig 3 eliminates the need to prepare the entirety of the jig 3 in accordance with the shape of the work S to be coated, and can reduce the cost of production of the jig 3.

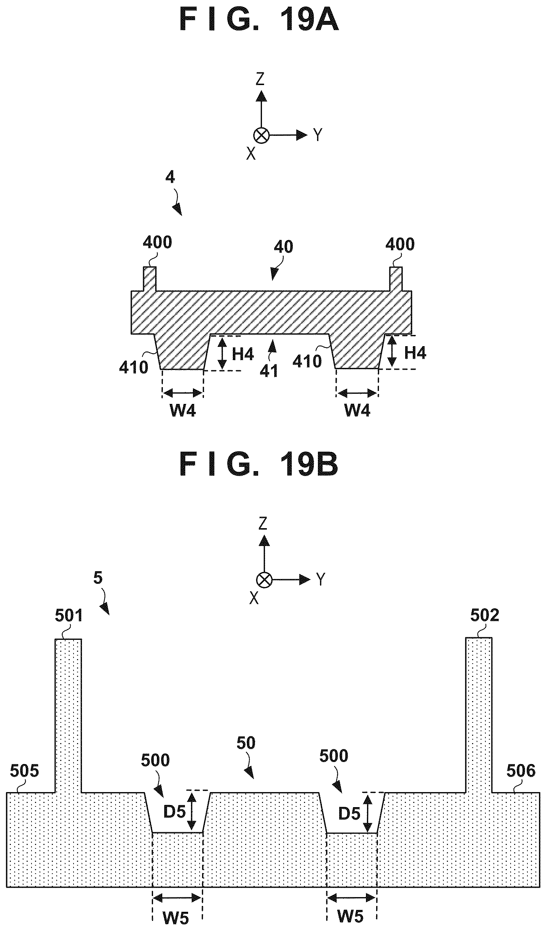

FIGS. 19A and 19B will be referred to. FIG. 19A is a cross-sectional view of the placement member 4. FIG. 19B is a cross-sectional view of the base member 5.

The placement member 4 has a placement surface 40 on which the work S to be coated is placed, and an opposing surface 41 (second opposing surface) that opposes the base member 5. The opposing surface 41 is a surface on the opposite side of the placement surface 40. The placement member 4 includes a support unit 400 that is formed on the placement surface 40 side and supports the work S to be coated. With the support unit 400, the position of the work S to be coated can be determined when the work S to be coated is placed on the placement member 4. The support unit 400 is a protrusion portion that projects from the placement surface 40. Note that the placement member 4 may be in a form in which it does not include the support unit 400.

The placement member 4 is provided with a protrusion portion 410 on the opposing surface 41 side. The protrusion portion 410 projects from the opposing surface 41 toward the opposing surface 50 side of the base member 5.

The base member 5 has the opposing surface 50 (first opposing surface) that opposes the opposing surface 41 of the placement member 4. The base member 5 is provided with a recessed portion 500 on the opposing surface 50 side. Further, the aforementioned first protrusion portion 501 and the second protrusion portion 502 are formed on the opposing surface 50. The first protrusion portion 501 and the second protrusion portion 502 each project from the opposing surface 50. The protrusion portion 410 of the placement member 4 engages with the recessed portion 500 of the base member 5. With this configuration, the placement member 4 can be fixed with respect to the base member 5. The protrusion portion 410 and the recessed portion 500 are configurations for determining the position of the placement member 4 relative to the base member 5.

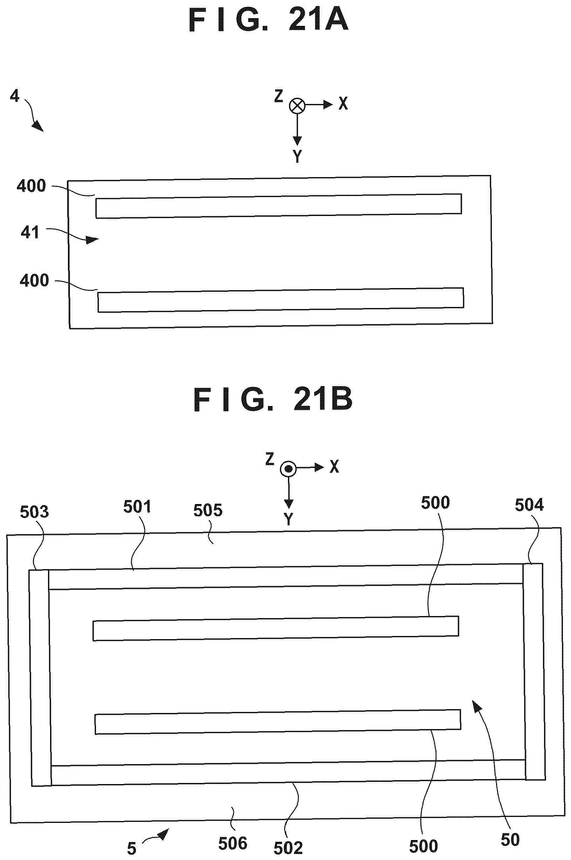

When the film F that has been conveyed above the jig 3 has been lowered toward the work S to be coated, the film F comes into contact with the first protrusion portion 501 and the second protrusion portion 502 (see FIGS. 13 and 14). In this state, the sealed space surrounded by the film F and the base member 5 (the first protrusion portion 501, the second protrusion portion 502, and the placement surface 40) is formed. By thus configuring the first protrusion portion 501 and the second protrusion portion 502 so that they project to a position that is higher than the work S to be coated placed on the placement member 4 from the placement surface 40, the sealed space can be formed. Also, as illustrated in FIG. 18, the base member 5 may further include a third protrusion portion 503 that connects an end portion of the first protrusion portion 501 and an end portion of the second protrusion portion 502. Further, a fourth protrusion portion 504 similar to the third protrusion portion 503 may be provided also on the opposite side, which is not illustrated in FIG. 18 (see FIG. 21B). By providing the third protrusion portion 503 and the fourth protrusion portion 504, an area surrounded by the first protrusion portion 501 to the fourth protrusion portion 504 is formed, and therefore the sealed space can be formed reliably by the film F coming into contact with the first protrusion portion 501 to the fourth protrusion portion 504.

When coating the work S to be coated with the film F, an air pressure difference is generated between the sealed space and the outer space as a result of the air pressure adjustment by the air pressure adjustment unit 115 as described above. The film F is suctioned to the sealed space side by this air pressure difference. That is, the air pressure in the sealed space becomes lower than the air pressure in the outer space. Due to the air pressure difference, the film F is suctioned to the sealed space side, and the work S to be coated is coated with the film F. When coating the work S to be coated with the film F, a pressure from the external space side is applied to the jig 3. Incidentally, depending on the dimensional relationship between the protrusion portion 410 of the placement member 4 and the recessed portion 500 of the base member 5, there is a risk that a gap is created between the opposing surface 41 (second opposing surface) of the placement member 4 and the opposing surface 50 (first opposing surface) of the base member 5. If such a gap exists, the jig 3 could possibly deform due to a pressure from the external space side. In view of this, the present embodiment will be described in relation to a configuration in which deformation of the jig 3 is prevented when coating the work S to be coated with the film F.

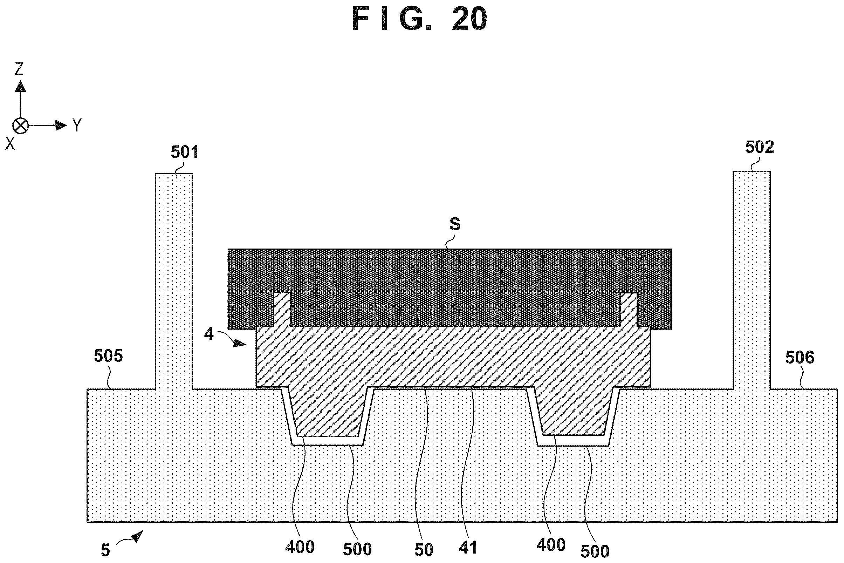

FIG. 20 will be referred to. FIG. 20 is a cross-sectional view illustrating a state in which the placement member 4 is supported by the base member 5. As illustrated in FIG. 20, the dimensional relationship between the protrusion portion 410 and the recessed portion 500 is such that they engage with each other so that the opposing surface 41 and the opposing surface 50 come into contact with each other. In this way, when mounting the placement member 4 on the base member 5, it is possible to prevent the occurrence of a state in which a gap is created between the opposing surface 41 and the opposing surface 50. Therefore, deformation of the jig 3 can be prevented when coating the work S to be coated with the film F.

The recessed portion 500 is shaped such that a cross-sectional area thereof increases from a bottom portion of the recessed portion 500 toward an opening of the recessed portion 500, that is, the recessed portion 500 flares out. Further, the protrusion portion 410 is shaped such that a cross-sectional area thereof decreases from a base end of the protrusion portion 410 toward a tip of the protrusion portion 410, that is, the protrusion portion 410 tapers down. With such shapes, the protrusion portion 410 and the recessed portion 500 can smoothly engage with each other when mounting the placement member 4 on the base member 5.

The dimensional relationship between the protrusion portion 410 and the recessed portion 500 will be described (see FIGS. 19A and 19B). A height H4 from the base end to the tip of the protrusion portion 410 is equal to or smaller than a depth D5 from the opening to the bottom portion of the recessed portion 500. A width W4 of the tip of the protrusion portion 410 is equal to or smaller than a width W5 of the bottom portion of the recessed portion 500. Note that the width of the base end of the protrusion portion 410 is equal to or smaller than the opening width of the recessed portion 500. With such a dimensional relationship, the protrusion portion 410 and the recessed portion 500 can engage with each other such that the opposing surface 41 and the opposing surface 50 come into contact with each other when mounting the placement member 4 on the base member 5.

Further, in the present embodiment, the height H4 of the protrusion portion 410 is smaller than the depth D5 of the recessed portion 510, and the width W4 of the protrusion portion 410 is smaller than the width W5 of the recessed portion 500. With such a dimensional relationship, the protrusion portion 410 can be reliably inserted into the recessed portion 500 even when a manufacturing error of the protrusion portion 410 or the recessed portion 500 has occurred.

Note that although the present embodiment has been described in relation to a configuration in which the height H4 of the protrusion portion 410 is smaller than the depth D5 of the recessed portion 500 and the width W4 of the protrusion portion 410 is smaller than the width W5 of the recessed portion 500, a configuration in which the height H4 of the protrusion portion 410 is equal to the depth D5 of the recessed portion 500 may be taken. Further, a configuration in which the width W4 of the protrusion portion 410 is equal to the width W5 of the recessed portion 500 may be taken.

Further, in the present embodiment, the jig 3 includes a plurality of combinations of the protrusion portion 410 and the recessed portion 500. In this way, a positional displacement of the placement member 4 relative to the base member 5 can be prevented when mounting the placement member 4 on the base member 5. Although the present embodiment has been described in relation to a configuration in which the jig 3 includes two combinations of the protrusion portion 410 and the recessed portion 500, a configuration in which the number of combinations of the protrusion portion 410 and the recessed portion 500 is larger than two may be taken.

FIGS. 21A and 21B will be referred to. FIG. 21A is a bottom view of the placement member 4, and is a diagram of the placement member 4 as viewed from the base member 5 side. FIG. 21B is a top view of the base member 5, and is a diagram of the base member 5 as viewed from the placement member 4 side.

The protrusion portion 410 is shaped such that it extends in the X direction, which is the direction of conveyance of the film F. The recessed portion 500 is shaped such that it extends in the X direction in correspondence with the protrusion portion. With such shapes, a positional displacement of the placement member 4 can be prevented when mounting the placement member 4 on the base member 5.

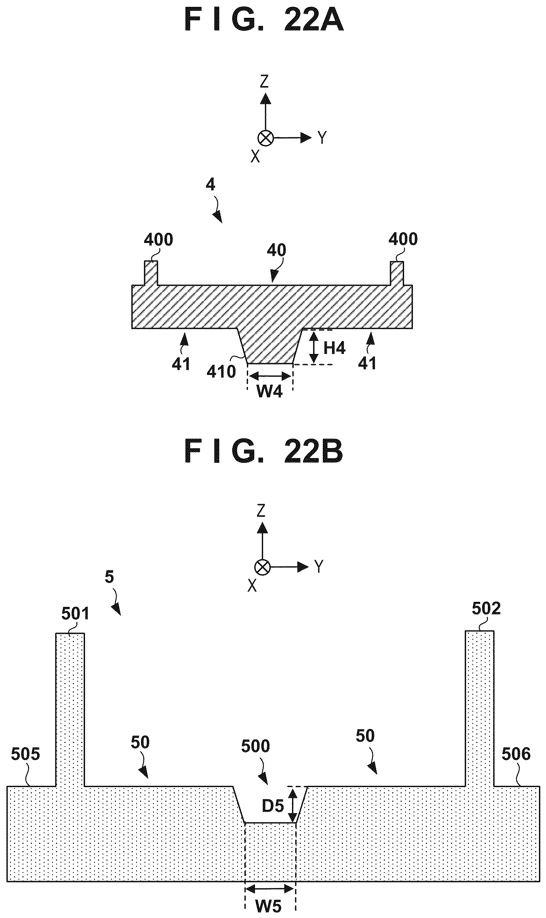

FIGS. 22A and 22B will be referred to. FIG. 22A is a diagram illustrating another example of the placement member 4, and is a cross-sectional view of the placement member 4. FIG. 22B is a diagram illustrating another example of the base member 5, and is a cross-sectional view of the base member 5. As illustrated in FIG. 22A, one protrusion portion 410 may be provided. Also, as illustrated in FIG. 22B, one recessed portion 500 may be provided.

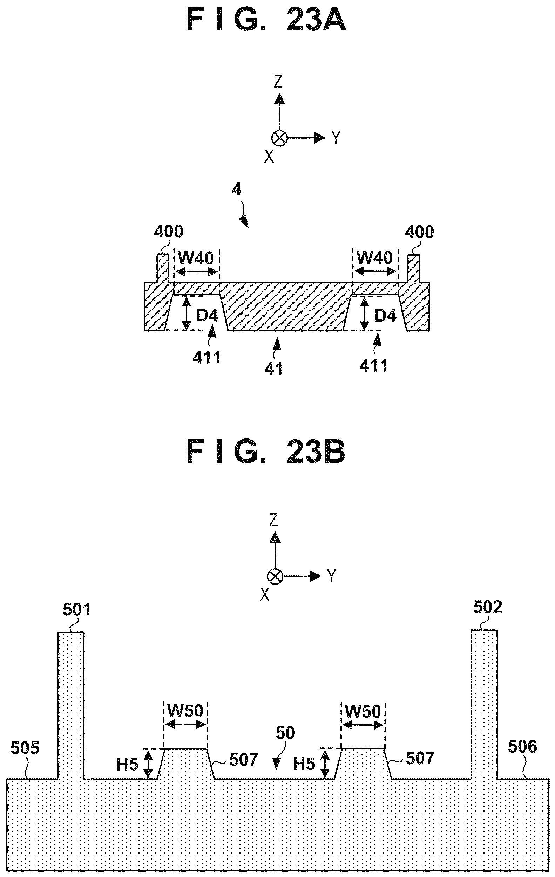

Further, although the present embodiment has been described in relation to a configuration in which the placement member 4 is provided with the protrusion portion 410 and the base member 5 is provided with the recessed portion 500, a configuration in which the protrusion portion and the recessed portion are reversed may be taken. FIGS. 23A and 23B will be referred to. FIG. 23A is a cross-sectional view illustrating still another example of the placement member 4. FIG. 23B is a cross-sectional view illustrating still another example of the base member 5. It is possible to take a configuration in which a recessed portion 411 is provided on the opposing surface 41 of the placement member 4 as illustrated in FIG. 23A, and a protrusion portion 507 is provided on the opposing surface 50 of the base member 5 as illustrated in FIG. 23B. Note that a height H5 of the protrusion portion 507 is equal to or smaller than a depth D4 of the recessed portion 411, and a width W50 of the protrusion portion 507 is equal to or smaller than a width W40 of the recessed portion 411. Even in the case of this configuration, the opposing surface 41 of the placement member 4 and the opposing surface 50 of the base member 5 can be brought into contact with each other.

### <Other Embodiments>

The above embodiment has been described in relation to an example in which the work S to be coated is coated with the film F by making the interior of the chamber 7 open to the atmosphere after depressurizing the same using the air pressure adjustment unit 115. A method of coating the work S to be coated with the film F is not limited thereto. The work S to be coated may be coated without heating the film F. Further, the work S to be coated may be coated with the film F without depressurizing the interior of the chamber 7. The work S to be coated may be coated with the film F by pressurizing the film F using, for example, compressed air from a side of the film F that is opposite to a surface thereof on the work S to be coated. Alternatively, the work S to be coated may be coated by pressing the film F thereagainst using, for example, a die.

The invention is not limited to the foregoing embodiments, and various variations/changes are possible within the spirit of the invention.

## Claims

1. A jig (3) used in a coating apparatus (100) that coats a work to be coated (S) with a film (F), the jig (3) comprising:
a base member (5) including a first opposing surface (50);
a placement member (4) including a placement surface (40) on which the work to be coated (S) is placeable, and a second opposing surface (41) that opposes the first opposing surface (50), the placement member (4) being attachable to and removable from the base member (5);
a recessed portion (500) formed in one of the placement member (4) and the base member (5); and
a protrusion portion (410) that is formed in another one of the placement member (4) and the base member (5) and configured to engage with the recessed portion (500),
wherein dimensions of the recessed portion (500) and the protrusion portion (410) are such that the recessed portion (500) and the protrusion portion (410) engage with each other so that the first opposing surface (50) and the second opposing surface (41) come into contact with each other.

2. The jig (3) according to claim 1,
wherein the second opposing surface (41) is a surface on a side opposite to the placement surface (40).

3. The jig (3) according to claim 1 or 2,
wherein the recessed portion (500) is shaped such that a cross-sectional area thereof increases from a bottom portion of the recessed portion (500) toward an opening of the recessed portion (500), and
the protrusion portion (410) is shaped such that a cross-sectional area thereof decreases from a base end of the protrusion portion (410) toward a tip of the protrusion portion (410).

4. The jig (3) according to any one of claims 1 to 3,
wherein a height of the protrusion portion (410) is equal to or smaller than a depth of the recessed portion (500), and
a width of the protrusion portion (410) is equal to or smaller than a width of the recessed portion (500).

5. The jig (3) according to claim 4,
wherein the height of the protrusion portion (410) is smaller than the depth of the recessed portion (500), and
the width of the protrusion portion (410) is smaller than the width of the recessed portion (500).

6. The jig (3) according to any one of claims 1 to 5,
wherein a plurality of combinations of the recessed portion (500) and the protrusion portion (410) are provided.

7. The jig (3) according to any one of claims 1 to 6,
wherein the recessed portion (500) is formed in the base member (5), and
the protrusion portion (410) is formed in the placement member (4).

8. The jig (3) according to any one of claims 1 to 7,
wherein the jig (3) is a jig that is used when coating the work to be coated (S) with the film (F) inside a chamber (7) that can be held in a depressurized state.

9. The jig (3) according to any one of claims 1 to 8,
wherein the jig (3) is a jig that supports, as the work to be coated (S), a member for a vehicle.

10. A coating apparatus (100) that coats a work to be coated (S) with a film (F), the coating apparatus (100) comprising:
a jig (3) used in the coating apparatus (100),
wherein the jig (3) includes
a base member (5) including a first opposing surface (50),
a placement member (4) including a placement surface (40) on which the work to be coated (S) is placeable, and a second opposing surface (41) that opposes the first opposing surface (50), the placement member (4) being attachable to and removable from the base member (5),
a recessed portion (500) formed in one of the placement member (4) and the base member (5), and
a protrusion portion (410) that is formed in another one of the placement member (4) and the base member (5) and configured to engage with the recessed portion (500), and
dimensions of the recessed portion (500) and the protrusion portion (410) are such that the recessed portion (500) and the protrusion portion (410) engage with each other so that the first opposing surface (50) and the second opposing surface (41) come into contact with each other.
